# EUROPEAN PATENT APPLICATION

(11) **EP 1 435 495 A2**
(43) Date of publication of application: **07.07.2004**
(21) Application number: 04000023.4
(22) Date of filing: 02.01.2004
(51) Int. Cl.: F25B 41/04

(54) **Switching valve**

(30) Priority: 06.01.2003 JP 2003000239; 06.06.2003 JP 2003161572
(71) Applicant: TGK Co., Ltd., Hachioji-shi, Tokyo 193-0942 (JP)
(72) Inventor: Koyama, Katsumi, Hachioji-Shi, Tokyo 193-0942 (JP)
(74) Representative: Grünecker, Kinkeldey, Stockmair & Schwanhäusser Anwaltssozietät

(57) **Abstract**

In a switching valve a first valve is disposed between an inlet port 2 and a first outlet port 3. A pilot valve is provided between a back pressure chamber for a movable plug 5 that holds a valve sheet 7 opposed to a valve seat 6, and the first outlet port 3. The first valve is pilot operated by a solenoid. A second valve is arranged between the inlet port 2 and a second outlet port 4. A back pressure chamber for a movable plug 25 that holds a valve sheet 26 opposed to a valve seat 24 and the first outlet port 3 communicate. The second valve is opened over a large opening stroke by differential pressure generated by closing the first valve. When the first valve opens, the second valve is closed by a spring 30 since the differential pressure is reduced to zero. The closed state of the second valve is maintained by a difference between pressure-receiving areas. The second valve has a sliding sealing structure like an X-packing 28.

## Description

This invention relates to a switching valve according to the preamble of claims 1, 3 or 4, and particularly for switching a refrigerant passage in a refrigeration cycle of an automotive air conditioner.

In general, in an automotive air conditioner, cooling is carried out using a refrigeration cycle that circulates refrigerant, and heating is carried out using engine coolant. Recently, however, due to the improvement in combustion efficiency of the engine, the temperature of the coolant does not rise high enough in a short time to a temperature required for heating.

It has been proposed to use high-temperature and high-pressure refrigerant discharged from the compressor in a refrigeration cycle for auxiliary heating (JP-A-2000-318436). High-temperature and high-pressure refrigerant adiabatically compressed by the compressor is first condensed by a condenser, and is then adiabatically expanded by an expansion valve into refrigerant at low temperature and low pressure. The expanded refrigerant is evaporated by an evaporator, and then separated into gas and liquid by an accumulator. Gaseous refrigerant obtained by the separation returns to the compressor. Alternatively, the high-temperature refrigerant discharged from the compressor is introduced into the evaporator, to thereby utilize the evaporator as an air heater. A switching valve arrangement on the discharge side of the compressor causes the compressed refrigerant to selectively flow toward the condenser or the evaporator. In the switching valve arrangement a first solenoid valve is disposed between the compressor and the condenser, and a second solenoid valve is disposed between the compressor and the evaporator. The first and second solenoid valves are controlled such that the first solenoid valve is opened and the second solenoid valve is closed during cooling operation, and that the first solenoid valve is closed and the second solenoid valve is opened during heating operation.

The switching operation may alternatively be carried out by a single solenoid valve (JP-A-2001-124440). In this integrated switching valve, a solenoid valve for performing opening/closing control of a refrigerant passage between the compressor and the condenser is integrally formed with a differential pressure valve that opens a refrigerant passage between the compressor and the evaporator when the differential pressure between the compressor and the condenser becomes equal to or larger than a predetermined value, with the above solenoid valve being in a closed state. The differential pressure valve comprises a valve element for sensing the differential pressure between the compressor and the condenser, a spring for urging the valve element toward a valve seat, and a diaphragm for sealing between the compressor and the condenser. The sealing mechanism of the differential pressure valve provided for opening and closing the refrigerant passage between the compressor and the evaporator is formed by the diaphragm which only can carry out a relatively small displacement stroke causing a considerably significant pressure loss across the differential pressure valve. Hence when an attempt is made to increase the opening stroke of the switching valve so as to reduce the pressure loss in the differential pressure valve, the size of the valve construction has to be increased. Big sized valves, however, need large mounting space and are heavy.

It is an object of the present invention to provide a compact switching valve in which the maximum opening stroke of the valve operated by differential pressure is increased, thereby reducing the pressure loss in the valve.

The above object is achieved by the features of claims 1, 3 or 4.

According to the invention the second valve is constructed such that the valve element thereof receives a differential pressure between an upstream side (inlet port) and a downstream side (first outlet port) of the first valve. The valve element is urged by the spring in the direction in which the valve element is seated on the valve seat. When the first valve operated by the solenoid is closed, the second valve is opened by the differential pressure generated thereacross by the closing of the first valve, and when the first valve is opened, the second valve is closed by the spring. After the second valve is closed, the valve-closed state of the second valve is maintained since a pressure-receiving area on a seating side of the second valve is reduced. Further, since the sliding portion of the valve element of the second valve is sealed by a slidable sealing member, the maximum opening stroke of the second valve can be increased while saving space, whereby the pressure loss can be reduced. In the switching valve the second valve is opened by a differential pressure generated by closing the solenoid operated first valve. When the first valve is opened, the differential pressure is reduced to zero, and the second valve is closed by the spring. Then the valve-closed state is maintained by the spring and a difference between pressure receiving areas. This allows to increase the maximum valve element opening stroke, to design the first and second valves with vale holes having the same diameter, and to thereby reduce pressure losses while saving space.

Further, by using a slidable seal in the second valve, more space can be saved.

Alternatively, by providing a third valve for sealing a sliding portion of the second valve on a back pressure chamber side, it is possible not only to save more space but also to reduce the sliding resistance of the second valve, which makes it possible to further reduce the press loss occurring in the second valve.

Embodiments of the invention will be described with reference to the drawings.
- Fig. 1: is a longitudinal cross-section of a first embodiment of a switching valve (solenoid OFF).
- Fig. 2: shows the switching valve of Fig. 1 with the solenoid ON,
- Fig. 3: is a longitudinal cross-section of a second embodiment of a switching valve (solenoid OFF),
- Fig. 4: shows the switching valve of Fig. 3 with the solenoid ON,
- Fig. 5: is a longitudinal cross-section of a third embodiment of a switching valve (solenoid OFF),
- Fig. 6: shows the switching valve of Fig. 5 with the solenoid ON,
- Fig. 7: is a longitudinal cross-section of a fourth embodiment of a switching valve (solenoid OFF), and
- Fig. 8: shows the switching valve of Fig. 7 with the solenoid ON.

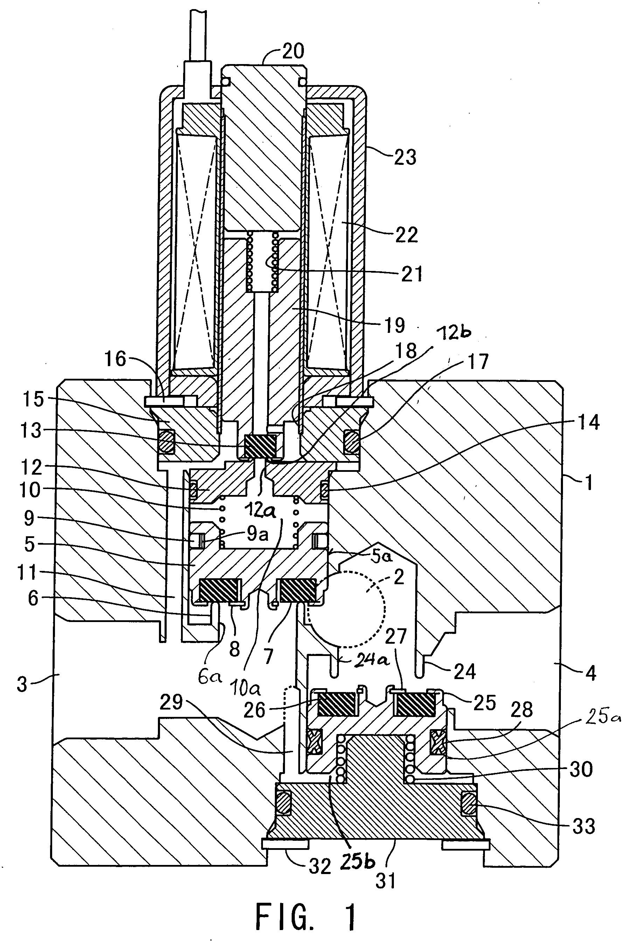

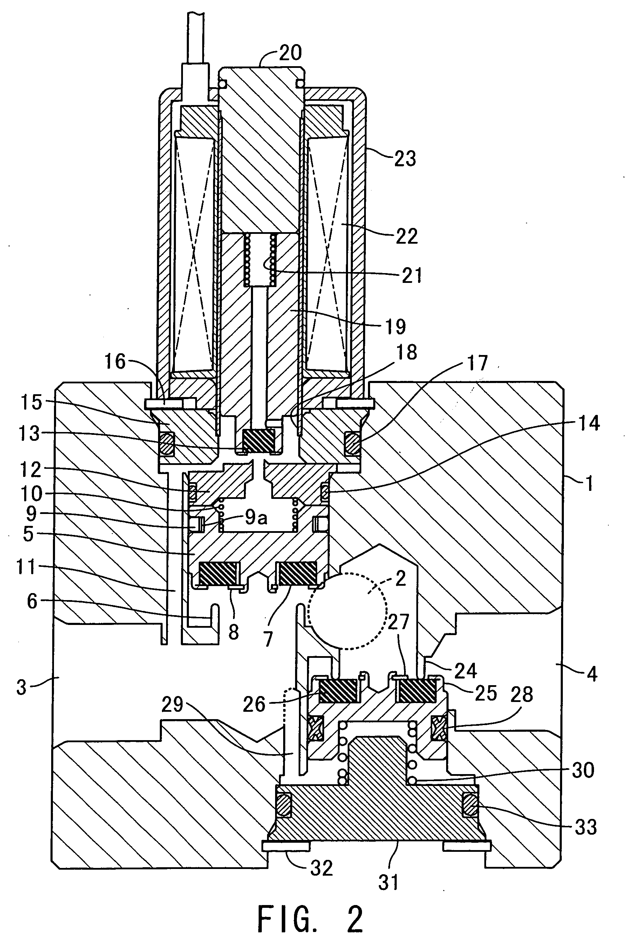

A switching valve includes in Figs 1 and 2 an inlet port 2 in a side of a body 1, for introducing pressurized refrigerant from a not shown compressor. A first outlet port 3 and a second outlet port 4 serve for supplying the refrigerant selectively to a condenser or an evaporator, respectively. A cylinder bore 5a communicating with the inlet port 2 contains a vertically movable plug 5. Below the plug 5 there is a hollow cylindrical valve seat 6 integrally formed with the body 1. The valve seat 6 has a valve hole 6a communicating with the first outlet port 3. The plug 5 has an annular valve sheet 7 disposed at a seat portion. The valve sheet 7 is held by a washer 8 and a swaged portion of the plug 5. The valve sheet 7 is made of a flexible material to provide good sealing performance when the plug 5 is seated on the valve seat 6. Preferably, the valve sheet 7 can be a sealing member made of polytetrafluoroethylene. The outer periphery of the plug 5 carries a piston ring 9 that slides on the inner wall of the cylinder bore 5a. A tension ring 9a urges the piston ring 9 radially outwardly. The piston has a circumferential interruption. A spring 10 in a back pressure chamber 10a of the plug 5 urges the plug 5 in a direction to the valve seat 6.

A pilot valve is disposed above the cylinder bore 5a accommodating the plug 5. The pilot valve comprises a valve portion for controlling whether or not the back pressure chamber for the movable plug 5 should be communicated with the first outlet port 3 via a passage 11 in the body 1, and a solenoid. The valve portion includes a fixed plug 12 which closes the upper opening of the cylinder bore 5a. The plug 12 has a central valve hole 12a, defining a pilot valve seat 12b. A valve sheet 13 is movable to and away from the pilot valve seat 12b, which is formed by the protruding rim of the valve hole 12a. The valve sheet 13 forms a pilot valve element. The plug 12 carries an O-ring 14 for sealing between the fixed plug 12 and the inner wall of the cylinder bore 5a.

Above the fixed plug 12, there is provided a cap 15 closing the upper opening of the body 1. The cap 15 secured by a C-ring 16, and sealed by an O-ring 17. The solenoid comprises a sleeve 18 fitted in a central opening of the cap 15, and a plunger 19 axially movably in the sleeve 18. The plunger 19 holds the valve sheet 13. A core 20 closes the upper end of the sleeve 18, and a spring 21 is disposed between the plunger 19 and the core 20, for urging the plunger 19 toward the fixed plug 12. A solenoid coil 22 is circumferentially arranged outside the sleeve 18, and a yoke 23 surrounds the solenoid coil 22. Thus, the above constitutes a pilot-operated solenoid valve, that is, a first valve of the switching valve.

A second valve of the switching valve is disposed between the inlet port 2 and the second outlet port 4. The second valve has a hollow cylindrical valve seat 24 integrally formed with the body 1 in an intermediate portion of a passage communicating between the inlet port 2 and the second outlet port 4. A movable plug 25 is disposed at the side of the second outlet port 4 opposed to the valve seat 24. The valve seat 24 has a valve hole 24a of substantially the same diameter as that of the valve hole 6a. The plug 25 has an annular valve sheet 26 opposed to the valve seat 24. The valve sheet 26 is held by a washer 27 and a swaged portion of the plug 25. On the outer periphery of the plug 25, there is provided an X-packing 28 made of a rubber or a resin. The X-packing 28 seals between the plug 25 and the inner wall of a cylinder bore 25a movably accommodating the plug 25. The slidable X-packing 28 as a sealing member allows to set a large maximum opening stroke of the plug 25 of the second valve. That large opening stroke reduces the pressure loss occurring when the refrigerant passes through the opened second valve. A back pressure chamber 25b for the plug 25 communicates with the first outlet port 3 via a passage 29, and contains a spring 30 urging the plug 25 toward the valve seat 24. The cylinder bore 25a is closed by a cap 31 which is secured by a C-ring 32, and sealed by an O-ring 33.

When the solenoid coil 22 is de-energized, (solenoid OFF), and with no refrigerant introduced into the inlet port 2, no solenoid, force for actuating the pilot valve is generated. The plunger 19 is pushed downward by the spring 21. The valve sheet 13 is seated on the pilot valve seat 12b. The passage 11 from the back pressure chamber 10a to the first outlet port 3 is blocked. The plug 25 is pushed upward by the spring 30, to block communication between the inlet port 2 and the second outlet port 4.

In the above state, when high-pressure refrigerant is introduced from the compressor into the inlet port 2, the pressure of the refrigerant attempts to push upward the plug 5 of the first valve, and to push downward the plug 25 of the second valve, in order to open both of the first and second valves. However, in the first valve, part of the refrigerant enters the back pressure chamber 10a for the plug 5 past the e.g. slotted piston ring 9, until the back pressure chamber 10a has the same pressure as the inlet port 2. As shown in Fig. 1, then the plug 5 is urged by the spring 10 onto the valve seat 6 to close the first valve. The closing step of the first valve causes the plug 25 to receive high pressure on the inlet port side, and low pressure from the first outlet port 3 in the back pressure chamber 25b. The plug 25 is pushed downward by the differential pressure. The second valve is placed in its open state.

When the solenoid coil 22 is energized (solenoid ON), as shown in Fig. 2, the plunger 19 is pulled by the core 20. The valve sheet 13 held on the plunger 19 is moved away from the pilot valve seat 12b. The back pressure chamber 10a communicates via the passage 11 with the first outlet port 3. The pressure in the back pressure chamber 10a is reduced. The plug 5 is pushed upward by high-pressure refrigerant introduced into the inlet port 2. The valve sheet 7 held by the movable plug 5 is moved away from the valve seat 6 to thereby open the first valve. The pressure in the back pressure chamber 25b for the plug 25, which back pressure chamber 25b communicates via the passage 29 with the first outlet port 3, becomes equal to the pressure at the inlet port 2. Since the movable plug 25 is urged toward the valve seat 24 by the spring 30, the valve sheet 26 is seated on the valve seat 24 to thereby close the second valve. When the valve sheet 26 is seated on the valve seat 24, the plug 25 has a pressure-receiving area on the inlet port side which is equal to the cross-sectional area of the valve hole 24a of the valve seat 24, and a pressure-receiving area on the back pressure chamber side, which is equal to the cross-sectional area of the plug 25. This causes a force the direction of closing of the second valve. The force of the spring 30 is also additionally applied. The closed state of the second valve is maintained. The first valve is a normally closed type which is closed when the solenoid is OFF.

The switching valve operates such that the second valve is opened by the differential pressure generated by closing of the first solenoid operated valve. Then the differential pressure is reduced to zero by opening the first valve. The second valve is closed by the spring 30. After the second valve is closed, the valve-closed state is held by the spring 30 and due to an intended difference between the pressure-receiving areas of the plug 25. Both valve holes 6a, 24a have substantially equal diameters. The maximum valve opening stroke can be large, so that it is possible to provide only a small pressure loss across the opened second valve. The slidable sealing member in the sealing structure of the second valve allows to achieve a large maximum opening stroke of the plug 25 of the second valve without increasing the size of the body 1. The switching valve has a space-saving compact structure.

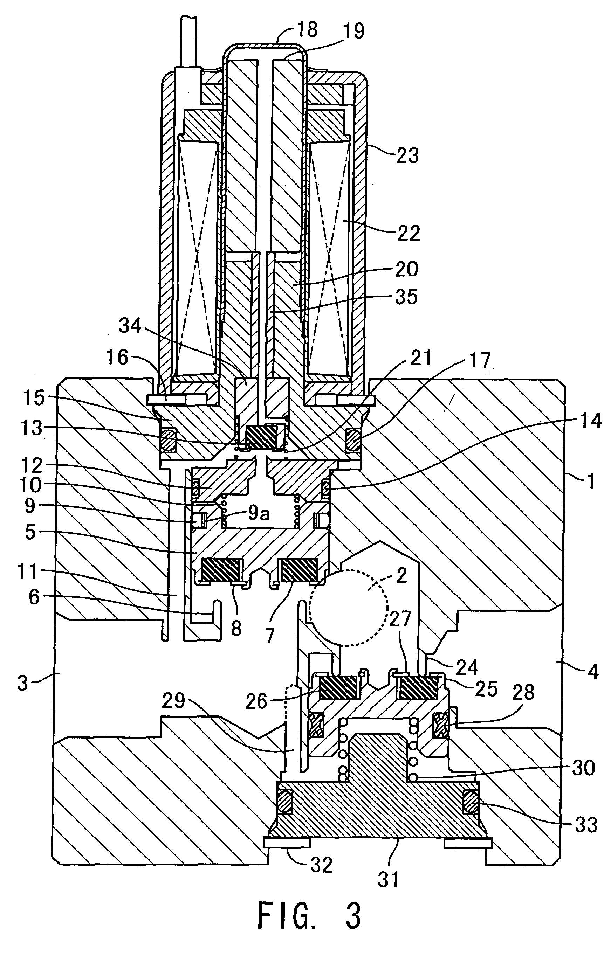

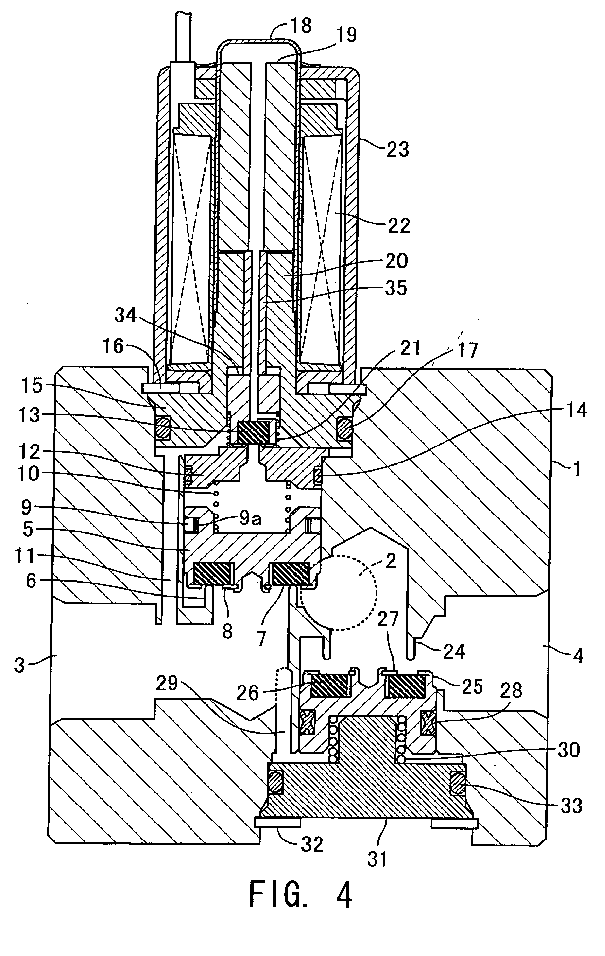

The switching valve of Figs 3 and 4 contains a first valve of a normally open type. The core 20 is integrally formed with the cap 15. A flange portion closes the upper opening of the body 1 and is rigidly fixed to the body 1 by the C ring 16. The plunger 19 is disposed within the sleeve 18 outside the core 20.

The core 20 has a downwardly open cylinder bore and contains an axially movable plug 34. The plug 34 holds the valve sheet 13, and is urged in a direction in which it moves away from the valve seat formed on the fixed plug 12, by a spring 21 disposed between the plug 34 and the fixed plug 12. A shaft 35 extending through the core 20 is arranged between the plug 34 and the plunger 19.

When the solenoid is OFF, the force of the spring 21 is transmitted to the plunger 19 via the plug 34 and the shaft 35 to move the plunger 19 away from the core 20. When the solenoid is ON, the solenoid force pulling the plunger 19 toward the core 20 is transmitted to the plug 34 via the shaft 35 to seat the valve sheet 13 on the valve seat formed on the fixed plug 12.

When high-pressure refrigerant is introduced into the inlet port 2 and the solenoid is OFF, the plug 5 is pushed upward by the pressure of the refrigerant, whereby the first valve is opened, since the pilot valve is open and connects the back pressure chamber for the movable plug 5 with the first outlet port 3 having low pressure. The plug 25 then is pushed downward by the pressure of the refrigerant and is about to open the second valve. However, due to the opening of the first valve, pressure on the downstream side of the first valve will increase, and this increasing pressure is introduced via the passage 29 into the back pressure chamber for the plug 25 so that the plug 25 seats the valve sheet 26 on the valve seat 24 by the upward urging force of the spring 30. Then, the second valve is held in its closed state by high pressure introduced into the back pressure chamber for the plug 25.

When the solenoid is ON, (Fig. 4), the plunger 19 is pulled to the core 20, and pushes downward the plug 34 via the shaft 35. The valve sheet 13 is seated on the pilot valve seat formed on the fixed plug 12. Due to closing of the pilot valve, part of the refrigerant is introduced into the back pressure chamber for the movable plug 5 past the piston ring 9, so that the pressure in the back pressure chamber is about the same as in the inlet port 2. The plug 5 is pushed downward by the spring 10. The valve sheet 7 is seated on the valve seat 6 to close the first valve. The pressures in the first outlet port 3 and in the back pressure chamber for the movable plug 25 both are reduced. The plug 25 is pushed downward by the high-pressure refrigerant, whereby the second valve is opened.

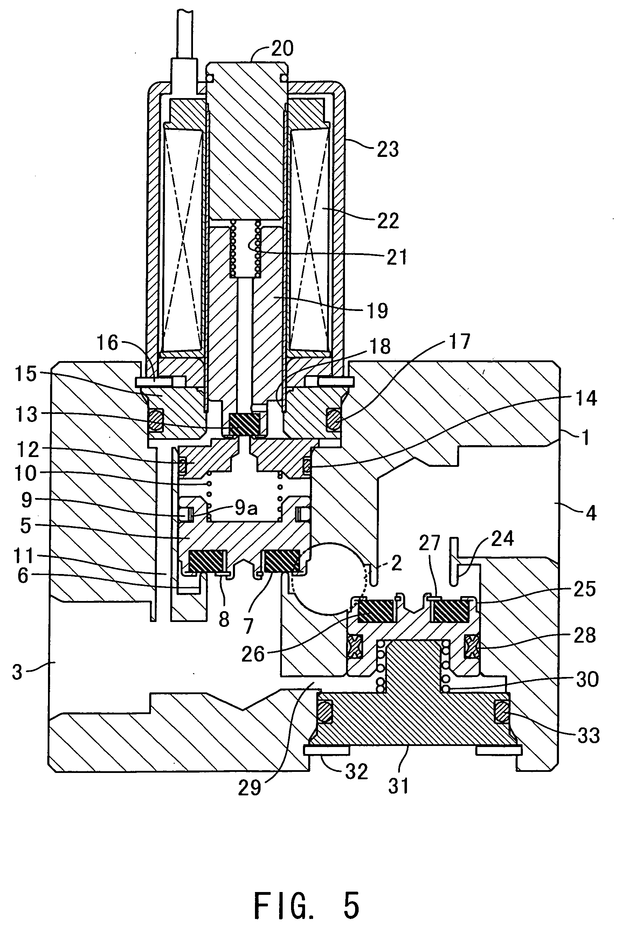

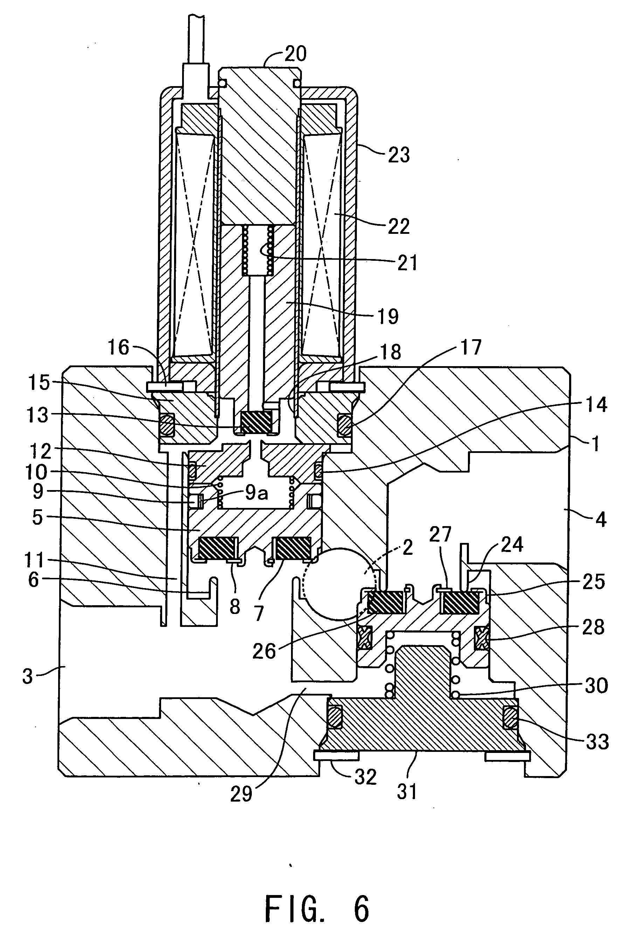

The switching valve of Figs 5 and 6 has the second valve on the upstream side of the valve seat 24. The plug 25 of the second valve is movable in the cylinder bore communicating with the inlet port 2. When the second valve is in its closed state, the refrigerant pressure-receiving area of the plug 25 is equal to an area obtained by subtracting the cross-sectional area of the valve hole of the valve seat 24 from the cross-sectional area of the plug 25. Since this area is smaller than the pressure-receiving area of the movable plug 25 where the pressure of refrigerant is received from the back pressure chamber, the valve-closed state of the second valve can be maintained when the first valve is open.

When the solenoid is OFF, the pilot valve is closed. When high-pressure refrigerant is introduced into the inlet port 2 (Fig. 5), first, in the first valve, the plug 5 is about to move upward by the pressure, but since part of the refrigerant also enters the back pressure chamber for the plug 5 via the piston ring 9, until the pressure in the back pressure chamber for the movable plug 5 becomes equal to the pressure in the inlet port 2, the plug 5 is urged toward the valve seat 6 by the spring 10 to close the first valve. This causes a pressure reduction at the first outlet port 3, and hence the plug 25 is pushed downward by the pressure of the refrigerant introduced, whereby the second valve is opened.

When the solenoid is ON (Fig. 6), the pilot valve is open. The back pressure chamber for the movable plug 5 communicates via the passage 11 with the first outlet port 3. The pressure in the back pressure chamber for the plug 5 is reduced. The plug 5 is pushed upward by the pressure of the high-pressure refrigerant introduced into the inlet port 2 to open the first valve. Then the pressure in the back pressure chamber for the movable plug 25, which back pressure chamber communicates via the passage 29 with the first outlet port 3, becomes equal to in the inlet port pressure, so that the movable plug 25 is pushed upward by the spring 30, to close the second valve.

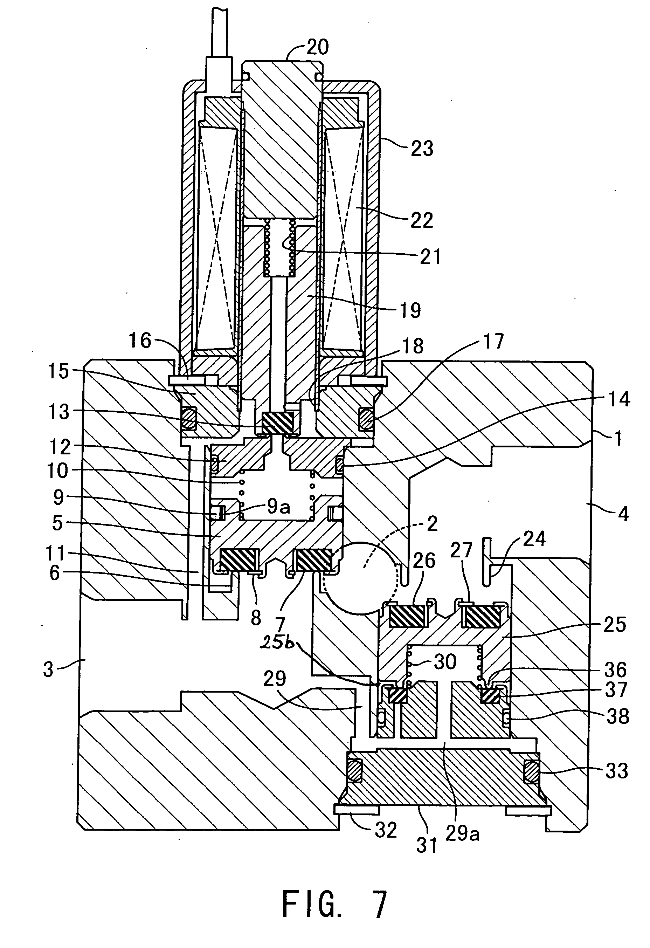

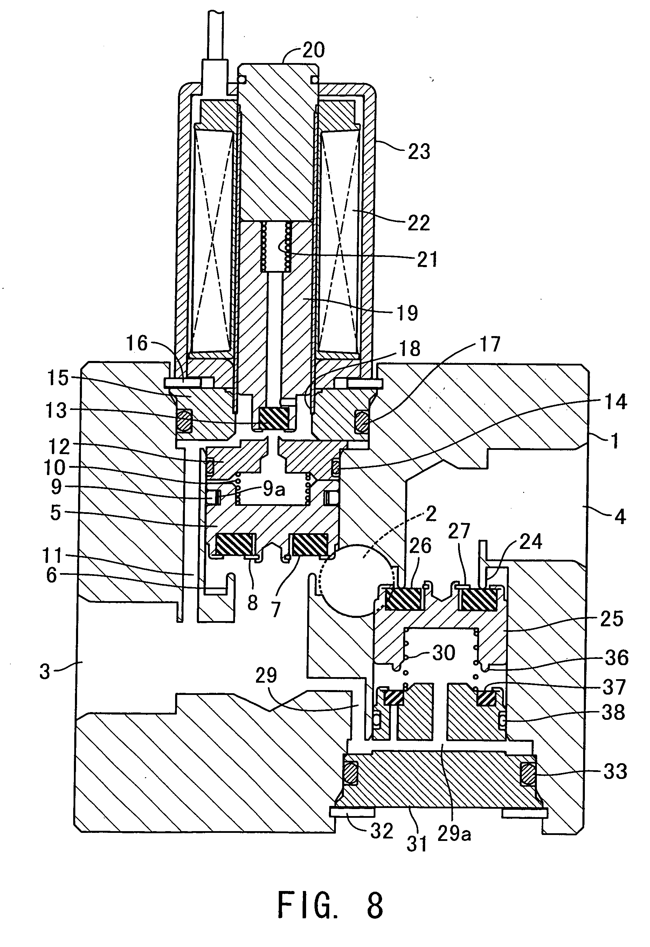

The switching valve of Figs 7 and 8 has a sealing structure in the second valve which generates substantially no sliding resistance.

The second valve has a third valve disposed on the back pressure chamber side thereof, for isolating the sliding portion of the second valve and the back pressure chamber from each other when the second valve is opened. The plug 25 of the second valve, for this reason, has a lower end face integrally formed with an annular projection 36 forming a valve element. On an end face of the cap 31 opposed to the annular projection 36 is arranged an annular valve sheet 37 forming a valve seat. The cap 31 has a central passage 29a which is surrounded by the valve sheet 37. The passage 29a opens into the back pressure chamber of the second valve. The passage 29a extends through the cap 31 to communicate with the passage 29 in the body 1. The cap 31 carries an O-ring 38 on the outer periphery on a side facing toward the second valve, for preventing refrigerant from leaking via the sliding portion of the movable plug 25 into the passage 29, when the second valve is open and when the third valve is closed.

The sealing of the sliding portion of the plug 25, which is required when the second valve is open, is achieved by using the annular projection 36 and the valve sheet 37. This allows to dispense with the X-packing 28 as shown for the plug 25 in Figs 1-6. Without the X-packing 28 the plug 25 can move more easily. Further, in the second valve the force of the spring 30 can be lower, which spring 30 is required for urging the movable plug 25 in valve-closing direction against the initial sliding resistance. Since the force of the spring 30 can be reduced because of the low sliding resistance of the plug 25, any force attempting to close the second valve from the open state also is reduced. This allows to further reduce the pressure loss in the refrigerant passing through the second valve, when the second valve opens or is fully opened, respectively.

When the solenoid is OFF, the pilot valve is closed. When high-pressure refrigerant is introduced into the inlet port 2 (Fig. 7), first, in the first valve, the movable plug 5 is about to move upward by the pressure, but part of the refrigerant also enters past the piston ring 9, the back pressure chamber for the movable plug 5 making the back pressure chamber pressure equal to the inlet port pressure. This urges the plug 5 by the spring 10 toward the valve seat 6 to close the first valve. This reduces the pressure in the first outlet port 3. Hence, the plug 25 is pushed downward by the pressure of the refrigerant introduced, whereby the second valve is opened. At this time, the third valve comprising the annular projection 36 and the valve sheet 37 on the back pressure chamber side of the second valve, is closed. This prevents the refrigerant from flowing at high pressure via the sliding portion of the plug 25 and the passage 29 from the inlet port 2 to the first low pressure outlet port 3.

When the solenoid is ON (Fig. 8), the pilot valve is open. The back pressure chamber for the plug 5 communicates via the passage 11 with the first low pressure outlet port 3. The plug 5 is pushed upward by the high-pressure refrigerant introduced into the inlet port 2 to thereby open the first valve. When the first valve is opened, the pressure in the back pressure chamber for the movable plug 25, which back pressure chamber communicates via the passages 29, 29a with the first outlet port 3, becomes equal to the inlet port pressure, so that the plug 25 is pushed upward by the spring 30, to close the second valve.

Alternatively, the valve sheets 7, 26 needed for enhancing the sealing performance when the first and second valves are closed, instead could be arranged at the locations of the valve seats 6, 24, while the valve seats then will be formed on the plugs 25, 5.

Instead of the X-packing 28 in Figs 1-6 an O-ring could be used.

The concept of the invention can not only be applied to a refrigerant passage-switching valve which has one inlet port and is required to selectively switch between two outlet ports, in a refrigeration cycle disclosed e.g. in JP-A-2000-318436 or JP-A-2002-211234, but also can be applied to a refrigerant passage-switching part for bypassing one heat exchanger.

## Claims

1. A switching valve for directing refrigerant introduced into an inlet port (2) selectively to a first outlet port (3) or a second outlet port (4), **characterized by**:
a first solenoid controlled valve (5, 6, 7) in a flow passage between said inlet port (2) and said first outlet port (3) for opening and closing said flow passage; and
a second valve (24, 25, 26) including a valve seat (24) between said inlet port (2) and said second outlet port (4), a valve element (25, 26) capable of moving to and away from said valve seat (24), a passage (29) for introducing pressure from said first outlet port (3) to a surface of said valve element (25) opposite to a surface of said valve element opposed to said valve seat (24), a spring (30) urging said valve element (25) toward said valve seat (24), and a slidable sealing member (28) disposed in a sliding portion of said valve element (25).

2. The switching valve as in claim 1, **characterized in that** said slidable sealing member (28) is an X-packing or an O-ring, respectively.

3. A switching valve for directing refrigerant introduced into an inlet port (2) selectively to a first outlet port (3) or a second outlet port (4), **characterized in that**:
the switching valve comprises a solenoid-operated first valve (5, 6, 7) for opening or closing a refrigerant passage between said inlet port (2) and said first outlet port (3), and a second valve (24, 25, 26) in a refrigerant passage between said inlet port (2) and said second outlet port (4), the second valve being responsive in valve opening direction to a differential pressure generated by closing said first valve, and
that said second valve (24, 25, 26) has a slidable sealing mechanism (28) sealing between a downstream side of said first valve /5, 6, 7) and either a downstream side or an upstream side of said second valve (24, 25, 26).

4. A switching valve for directing refrigerant introduced into an inlet port (2) selectively to a first outlet port (3) or a second outlet port (4), **characterized by**:
a solenoid-operated first valve (5, 6, 7) for opening or closing a refrigerant passage between said inlet port (2) and said first outlet port (3);
a second valve (24, 25, 26) in a refrigerant passage between said inlet port (2) and said second outlet port (4), the second valve being responsive in valve opening direction to a differential pressure generated by closing said first valve; and
a third valve (36, 37) for temporarily isolating a sliding portion of a valve element (25) of said second valve from a back pressure chamber (25b) for said valve element (25), thereby sealing between a downstream side of said first valve (5, 6, 7) and an upstream side of said second valve (24, 25, 26), when said second valve is opened.

5. The switching valve according to claim 4, **characterized in that** said third valve (36, 37) has an annular projection (36) integrally formed with said valve element (25) of said second valve (24, 25, 26) on the side of said back pressure chamber (25b), and a valve seat (37) opposed to said annular projection (36) and surrounding an opening of a passage 29, 29a) which opens into said back pressure chamber (25b) and which communicates with the downstream side of said first valve (5, 6).
